# EUROPEAN PATENT APPLICATION

(11) **EP 4 650 261 A1**
(43) Date of publication of application: **19.11.2025**
(21) Application number: 24176502.3
(22) Date of filing: 17.05.2024
(51) Int. Cl.: B62J 15/00, B62J 7/04

(54) **MULTI-SECTION MUDGUARD STRUCTURE**

(71) Applicant: Tsai Jung Enterprise Co., Ltd., Changhua County 509004 (TW)
(72) Inventor: Chiu, Chih-Wen, 509004 Shengang Township, Changhua County (TW); Chung, Shih-Che, 509004 Shengang Township, Changhua County (TW); Lai, Wei-Sheng, 509004 Shengang Township, Changhua County (TW)
(74) Representative: Cabinet Chaillot

(57) **Abstract**

The present invention provides a multi-section mudguard structure, characterized in that it comprises a plurality of blocking bars, one of which is integrally provided with a rack; and a connector for providing detachable connection between the plurality of blocking bars. Thus, it can be understood that the mudguard of the present invention is assembled from a plurality of blocking bars by a connector, and can be disassembled for packaging during transportation. Compared to traditional mudguards, the arrangement angle during packaging is more flexible, effectively saving space in volume occupancy.

## Description

### BACKGROUND OF THE INVENTION

### Fields of the invention

The present invention relates to a multi-section mudguard structure, composed of a plurality of blocking bars combined with a connector for convenient assembly and disassembly during transportation.

### Descriptions of Related Art

Bicycles are excellent transportation vehicles, powered by human pedaling, which is environmentally friendly. They can be used for commuting, racing, sports and the like. Each component of a bicycle is crucial, and the quality and structure of each component are pursued to achieve comfort, stability of the frame, competitive performance, and other aspects.

During cycling, the forward motion mainly relies on pedaling to drive the rotation of the rear wheel. Therefore, the rear wheel, as the driving wheel, easily kicks up dust. Since the kicked-up dust may soil the rider's back, many bicycles are equipped with rear wheel mudguards to block the kicked-up dust.

Common mudguards on the market are designed to block dust kicked up by the rear wheel as effectively as possible. They typically are shaped in an arcuate curved sheet and extend in length to provide coverage from oblique rearward direction of the wheel. However, this design poses significant challenges for transportation companies. The longer arcuate curved sheet makes it difficult to fit snugly inside standard rectangular boxes during packaging. This results in significant wastage of space within the boxes, leading to oversized packaging volumes and consequently fewer units transported per shipment, ultimately increasing transportation costs for the operators.

In view of the aforementioned issues, reducing the wastage of space during the packaging and transportation of mudguards has become a significant consideration for industry.

### SUMMARY OF THE INVENTION

The present invention relates to a mudguard composed of a plurality of blocking bars combined with a connector, which can be disassembled for packing during transportation. Compared to traditional mudguards, it is more flexible in arrangement during packing, and can indeed save more volume. The present invention effectively improves the problem of excessive material wastage during packing and transportation of the conventional products, and has novelty and inventive step.

To achieve the above objectives and effects, the present invention provides a multi-section mudguard structure, characterized in that it comprises a plurality of blocking bars, one of which is integrally provided with a rack; and a connector for providing detachable connection between the plurality of blocking bars.

In the present invention, the connector is in a sheet form.

In the present invention, each of the blocking bars includes a positioning groove, and the connector includes a raised section located in the positioning groove

In the present invention, the connector includes a raised section; each of both sides of the raised section is connected to a bending section having one end connected to a folding section; and a part of the respective blocking bar connected to the connector is contoured to correspond to a shape of the connector.

In the present invention, the connector includes a raised section; each of both sides of the raised section is connected to a bending section having one end connected to a folding section; a part of the respective blocking bar connected to the connector is contoured to correspond to a shape of the connector; there is a receiving space in a part of each the blocking bars corresponding to the respective folding section; the receiving space is configured to receive a nut therein; the folding section has a perforation; and a plurality of screws are respectively inserted into the respective perforation and screwed into the nut in the corresponding receiving space.

In addition, one of the blocking bars in the present invention is also integrally provided with a rack (such as welding connection between the blocking bar and the rack), so that the rack does not need to include a supporting shelf for connection with the bicycle frame, further reducing the overall volume. For manufacturers producing both mudguards and racks simultaneously, it effectively reduces transportation volume.

### BRIEF DESCRIPTION OF THE DRAWINGS

FIG. 1 is a perspective schematic view of the present invention.
FIG. 1A is a perspective schematic view of the present invention from another angle.
FIG. 2 is an exploded schematic view of the present invention.
FIG. 3 is a cross-sectional schematic view taken along the line III-III of FIG. 1A.
FIG. 4 is a cross-sectional schematic view taken along the line IV-III of FIG. 1A.

### DETAILED DESCRIPTION OF THE PREFERRED EMBODIMENT

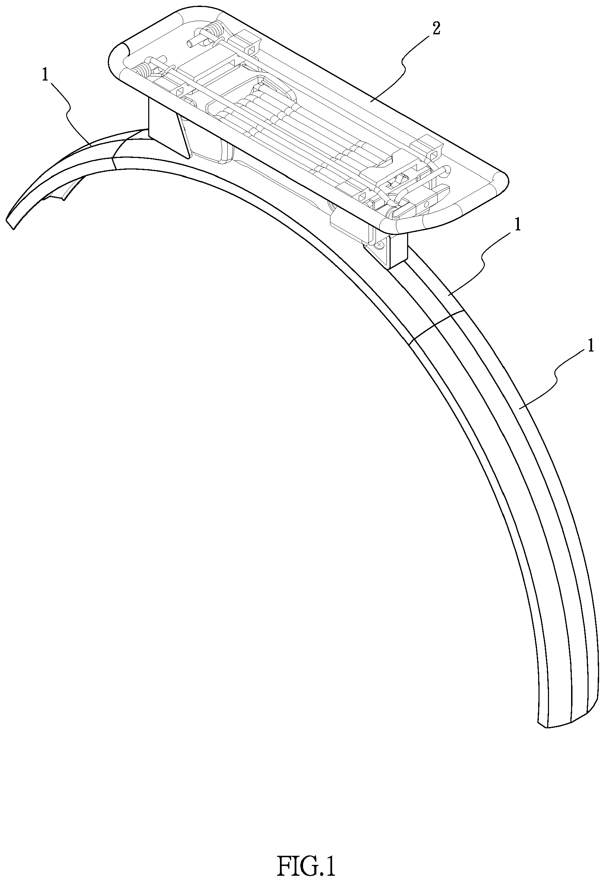

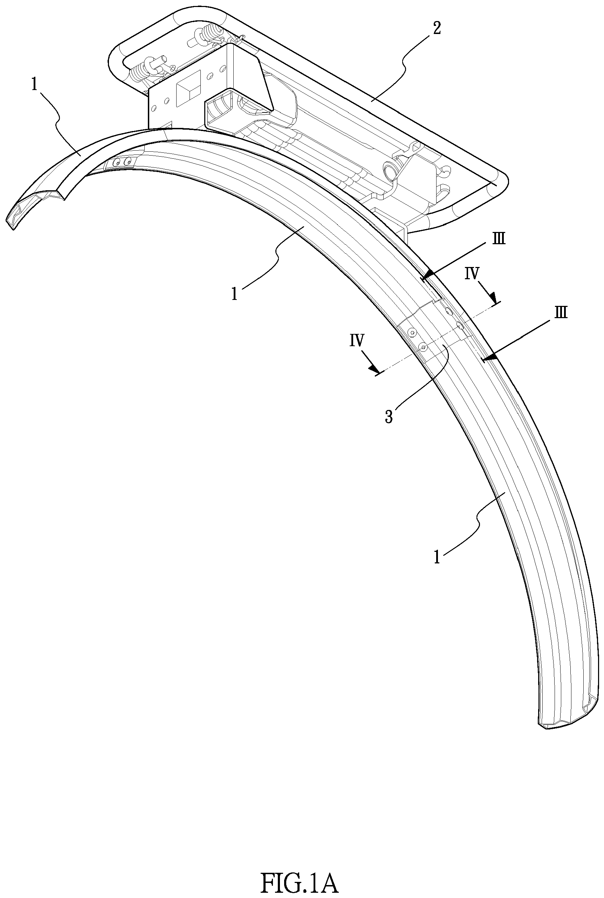

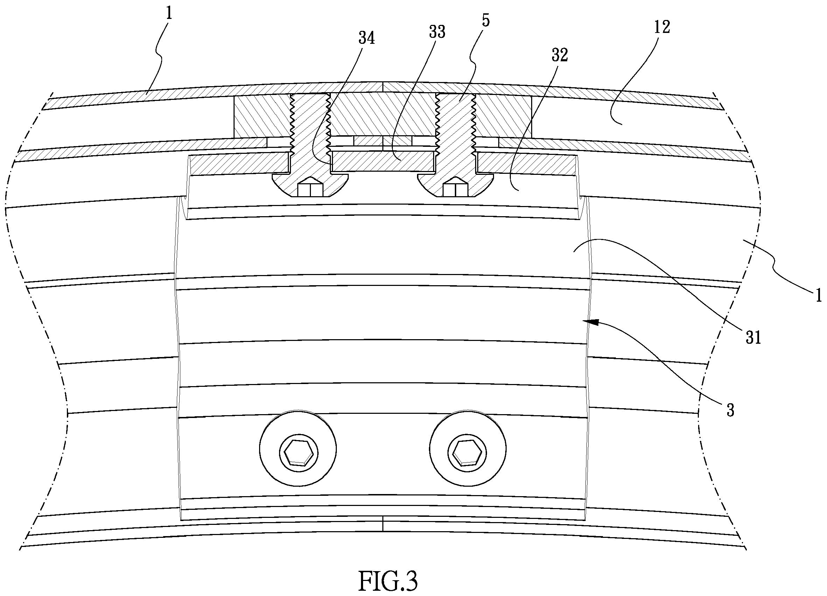

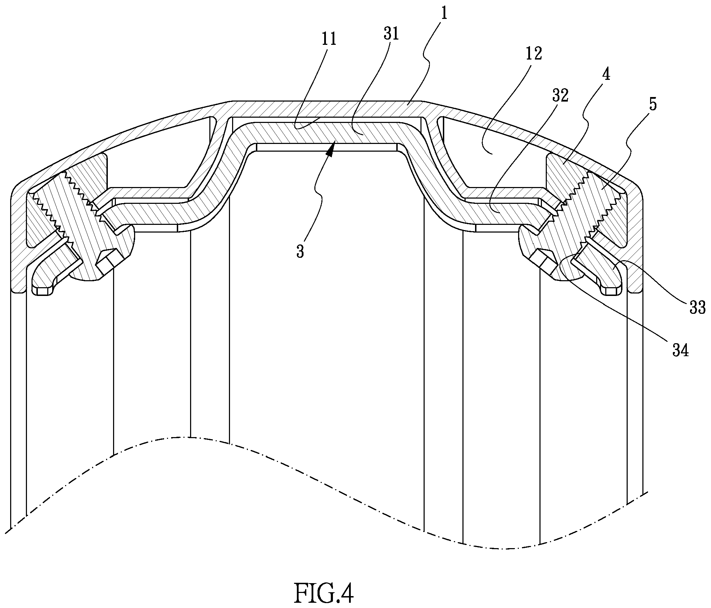

The embodiments of the present invention can be fully understood by referring to the accompanying figures. As shown in FIGS. 1-4, the present invention provides a multi-section mudguard structure, characterized in that it comprises a plurality of blocking bars 1, one of which is integrally provided with a rack 2; and a connector 3 for providing detachable connection between the plurality of blocking bars 1.

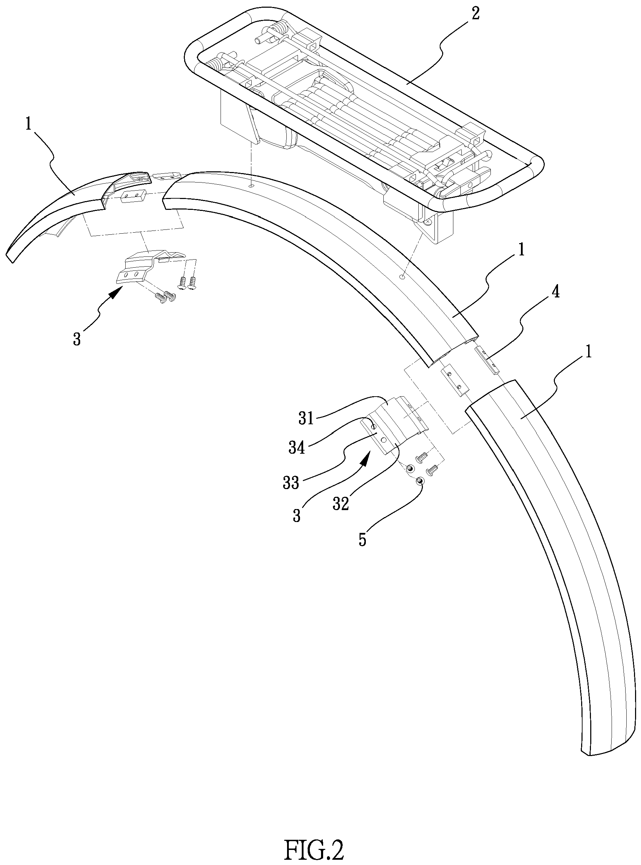

Continuing with a detailed description of the embodiments of the present invention, as shown in FIGS. 1 and 2, the present invention provides a mudguard composed of the plurality of blocking bars 1 assembled with the connectors 3. In this embodiment, three blocking bars 1 and two connectors 3 are illustrated as examples. The actual design can increase or decrease the number of blocking bars 1 and connectors 3 according to requirements, with a minimum requirement of two blocking bars 1.

From the foregoing, it can be understood that since the mudguard of the present invention is composed of the plurality of blocking bars 1 assembled with the connectors 3, it can be disassembled for packing during transportation. Compared to traditional mudguards, it is more flexible in arrangement during packing, and can indeed save more volume.

Furthermore, one of the blocking bars 1 according to the present invention is also integrally provided with a rack 2 (such as welding connection between the blocking bar 1 and the rack 2). In this embodiment, the blocking bar 1 at the middle position is integrally welded with a rack 2. Thus, the rack 2 does not need to include a supporting shelf for connection with the bicycle frame, further reducing the overall volume occupied by the rack 2. For manufacturers producing both mudguards and racks 2 simultaneously, it effectively reduces the product's transportation volume, thereby further reducing transportation costs.

Further, as shown in FIGS. 1 to 4, the connector 3 is in a sheet form, and the blocking bar 1 includes a positioning groove 11. The connector 3 includes a raised section 31 located in the positioning groove 11. Each of both sides of the raised section 31 is connected to a bending section 32 having one end connected to a folding section 33. A part of the blocking bar 1 connected to the connector 3 is contoured to correspond to the shape of the connector 3. There is a receiving space 12 in a part of the blocking bar 1 corresponding to the respective folding section 33. The respective receiving space 12 receives a nut 4 therein, and each folding section 33 has a perforation 34. A plurality of screws 5 are respectively inserted into the respective perforation 34 and screwed into the nut 4 in the corresponding receiving space 12. The advantage of this structure is that the raised section 31 of the connector 3 can be limited in the positioning groove 11, making the connection between the connector 3 and the blocking bar 1 more stable. Additionally, the receiving space 12 provides a placement for the nut 4, which can provide positioning for the nut 4 when not engaged with the screw 5, reducing the difficulty in assembling the mudguard structure of the present invention.

## Claims

1. A multi-section mudguard structure, **characterized in that** the multi-section mudguard structure comprises a plurality of blocking bars (1), one of which is integrally provided with a rack (2); and a connector (3) for providing detachable connection between the plurality of blocking bars (1).

2. The multi-section mudguard structure as claimed in claim 1, wherein the connector (3) is in a sheet form.

3. The multi-section mudguard structure as claimed in claim 1, wherein each of the blocking bars (1) includes a positioning groove (11), and the connector (3) includes a raised section (31) located in the positioning groove (11).

4. The multi-section mudguard structure as claimed in claim 1, wherein the connector (3) includes a raised section (31); each of both sides of the raised section (31) is connected to a bending section (32) having one end connected to a folding section (33); and a part of the respective blocking bar (1) connected to the connector (3) is contoured to correspond to a shape of the connector (3).

5. The multi-section mudguard structure as claimed in claim 1, wherein the connector (3) includes a raised section (31); each of both sides of the raised section (31) is connected to a bending section (32) having one end connected to a folding section (33); a part of the respective blocking bar (1) connected to the connector (3) is contoured to correspond to a shape of the connector (3); there is a receiving space (12) in a part of each the blocking bars (1) corresponding to the respective folding section (33); the receiving space (12) is configured to receive a nut (4) therein; the folding section (33) has a perforation (34); and a plurality of screws (5) are respectively inserted into the respective perforation (34) and screwed into the nut (4) in the corresponding receiving space (12).
